# EUROPEAN PATENT APPLICATION

(11) **EP 1 496 625 A1**
(43) Date of publication of application: **12.01.2005**
(21) Application number: 03719109.5
(22) Date of filing: 15.04.2003
(51) Int. Cl.: H04B 7/10, H04B 7/08, H01Q 3/26

(54) **ADAPTIVE ARRAY ANTENNA RECEIVER APPARATUS AND ANTENNA ARRAY CALIBRATION METHOD**

(30) Priority: 16.04.2002 JP 2002113760
(71) Applicant: MATSUSHITA ELECTRIC INDUSTRIAL CO., LTD., Kadoma-shi, Osaka 571-8501 (JP)
(72) Inventor: HASEGAWA, Yasuhiro, Sendai-shi, Miyagi 981-3206 (JP); TAKAKUSAKI, Keiji, Yokosuka-shi, Kanagawa 239-0847 (JP)
(74) Representative: Grünecker, Kinkeldey, Stockmair & Schwanhäusser Anwaltssozietät
(86) International application number: PCT/JP2003/004744
(87) International publication number: WO 2003/088522

(57) **Abstract**

An amplitude-phase information acquiring section 105 acquires information indicating variation in amplitude and phase, using a probe signal that suffers the same variation in amplitude and phase as a communication traffic signal received by antennas suffers, between each antenna and the amplitude-phase information acquiring section 105. A received power measuring section 106 measures the received power of the communication traffic signal and the probe signal. A correction value control section 107 adaptively determines, based on the amplitude-phase information and the received power, a correction value for correcting for the variation of the amplitude and phase of the communication traffic signal. A correcting section 108, for each antenna, corrects for the variation of the amplitude and phase of the communication traffic signal by using the correction value determined based on the received power. By this means, it is possible to correct for the amplitude-phase characteristic difference due to variations of input power levels for the electronic elements and thus provide an adaptive array antenna receiving apparatus that performs accurate directivity control.

## Description

### TECHNICAL FIELD

The present invention relates to an adaptive array antenna receiving apparatus and an antenna-array correcting method.

### BACKGROUND ART

An adaptive array antenna (hereinafter, called "AAA") is composed of a plurality of antenna elements. Each antenna element receives the same signal (hereinafter, called a "communication traffic signal") transmitted by a communication partner, and after the adjustment of the amplitudes and the shift of the phases, the received signals are combined. Therefore, predetermined amplitude and phase differences are made to the communication traffic signal received by each antenna element, and by then combining the signals having amplitude and phase differences made thereto, directivity (a direction in which radio waves are best received) can be changed without moving the antennas themselves.

However, until the amplitude adjustment and the phase shift are performed so that signals received by the antennas form desired directivity, each received signal varies in amplitude and phase inside the AAA receiving apparatus. The factors for this variation are the differences of the lengths of the cables forming paths of the respective received signals, differences in characteristics of electronic elements composing the transmitters and the receivers, path differences inside a variable attenuator in automatic gain control, and the like.

Therefore, when the amplitude and phase of the communication traffic signal received by the antenna change after being received and until directivity control is performed (hereinafter, variations of the amplitude and phase of the communication traffic signal received by the antenna are called an amplitude-phase-characteristic difference), it is essential that the AAA receiving apparatus correct for the amplitude-phase-characteristic difference. Hereinafter, a signal for finding the amplitude-phase-characteristic difference is called a probe signal.

One of technologies that correct for the characteristic difference in view of the above factors for the amplitude-phase-characteristic difference occurring is disclosed in Laid-Open Japanese Patent Publication No.2000-151255.

The correcting apparatus for an antenna array according to the above publication generates a probe signal encoded to be orthogonal to the communication traffic signal, and by injecting the probe signal into a wire path at a point close to each antenna element, combines the communication traffic signal therewith. After the combined signal is converted in frequency, the probe signal is extracted, and amplitude-phase information indicating the amplitude and phase is acquired from the extracted probe signal. Such amplitude-phase information is acquired for the signal received by each antenna. Using as a reference the amplitude-phase information of one antenna from among the amplitude-phase information acquired, correction values are determined such that amplitude-phase information of the other antennas are made equal to the reference amplitude-phase information. The communication traffic signal received by each antenna is multiplied by the respective determined correction value, thereby correcting for the amplitude-phase-characteristic difference.

However, although the characteristics of electronic elements, which is one of the factors for the amplitude-phase-characteristic difference, vary with input-power levels of the electronic elements, the above prior art does not take this fact into account, and the accuracy in correcting for the amplitude-phase-characteristic difference could be improved more. Here, the input-power level refers to the received power of the communication traffic signal. Because the communication traffic signal attenuates due to the transmission environment, it never occurs that the input-power level is constant.

### DISCLOSURE of INVENTION

The object of the present invention is to provide an adaptive array antenna receiving apparatus and antenna-array correcting method which improves the accuracy in correcting for the amplitude-phase-characteristic difference to perform accurate directivity control.

This object is achieved by adaptively determining a correction value for use for correction based on the input power level, when correcting for the amplitude-phase-characteristic difference that is variations of the amplitude and phase of a communication traffic signal received by each antenna.

### BRIEF DESCRIPTION OF THE DRAWINGS

FIG.1 is a block diagram showing the configuration of an AAA receiving apparatus according to embodiment 1 of the present invention;
FIG.2 is a view showing a table of amplitude-phase information and correction values;
FIG.3 is a block diagram showing the configuration of an AAA receiving apparatus according to embodiment 2 of the present invention;
FIG.4 is a block diagram showing the configuration of an AAA receiving apparatus according to embodiment 3 of the present invention; and
FIG. 5 is a view showing the state of assignment of TS8 (Time Slots) which the AAA receiving apparatus according to embodiment 3 of the present invention receives.
Best Mode for Carrying out the Invention

Embodiments of the present invention will be described below with reference to the drawings.

### (Embodiment 1)

In embodiment 1 of the present invention, a case will be described where a correction values is adaptively determined based on the received power of the communication traffic signal, and where the amplitude-phase-characteristic difference is corrected for by using the correction value.

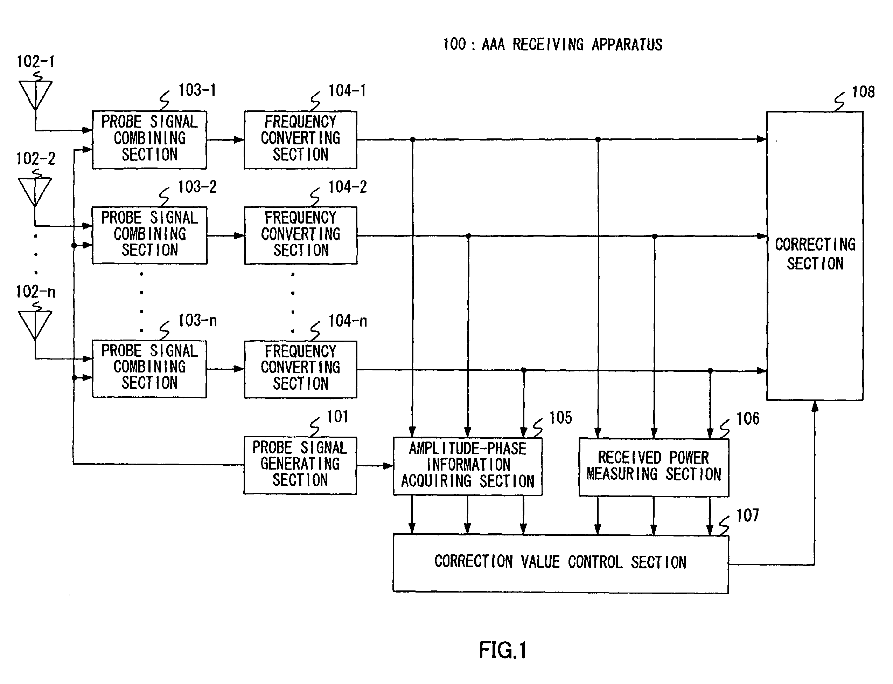

FIG.1 is a block diagram showing the configuration of an adaptive array antenna receiving apparatus 100 according to the embodiment 1 of the present invention. A probe signal generating section 101 generates a probe signal having the same frequency as the communication traffic signal, which is a signal transmitted from a communication partner. This probe signal is multiplied by a spreading code so as to be orthogonal to the communication traffic signal. Thus, combining the received communication traffic signal and the probe signal does not interfere with processing of the communication traffic signal. The probe signal generating section 101 outputs the generated probe signal to each of probe signal combining sections 103-1 to 103-n, and notifies an amplitude-phase information acquiring section 105 of the spreading code by which the probe signal was multiplied.

Antennas 102-1 to 102-n each receive the communication traffic signal transmitted by the communication partner. The received signals are outputted to the probe signal combining sections 103-1 to 103-n provided corresponding to the respective antennas 102-1 to 102-n.

The probe signal combining sections 103-1 to 103-n each combine the probe signal outputted from the probe signal generating section 101 and the communication traffic signal received by the respective antenna 102-1 to 102-n, and output to a respective frequency converting section 104-1 to 104-n. The signal obtained by combining the probe signal and the communication traffic signal is called a received signal herein. Note that in a state where no communication traffic sign is input, only the probe signal is outputted as the received signal.

The frequency converting sections 104-1 to 104-n convert the frequencies of the received signals outputted from the probe signal combining sections 103-1 to 103-n from radio frequencies into base-band frequencies to obtain received base-band signals. The received base-band signals are outputted to the amplitude-phase information acquiring section 105, a received power measuring section 106, and a correcting section 108.

The amplitude-phase information acquiring section 105 de-spreads all the received base-band signals for the respective antennas outputted from the frequency converting sections 104-1 to 104-n by using the spreading code notified from the probe signal generating section 101 to extract the probe signal. The amplitude-phase information acquiring section 105 acquires amplitude-phase information from all the extracted probe signals and outputs the acquired amplitude-phase information to a correction value control section 107.

The received power measuring section 106 measures the received powers of the received base-band signals outputted from the frequency converting sections 104-1 to 104-n and notifies the measured, received powers to the correction value control section 107.

The correction value control section 107 determines correction values for correcting for the amplitude-phase-characteristic differences based on the information outputted from the amplitude-phase information acquiring section 105 and the received power measuring section 106. The determined correction values are outputted to the correcting section 108. The method of determining correction values will be described later.

The correcting section 108 multiplies the received base-band signals outputted from the frequency converting sections 104-1 to 104-n by the respective correction values determined in the correction value control section 107. Using results of these multiplications, the receiving directivity is adaptively determined.

Next, the operation of the AAA receiving apparatus 100 having the above configuration will be described. The probe signal generating section 101 generates a probe signal having the same frequency as and being orthogonal to the communication traffic signal transmitted from a communication partner, and outputs the generated probe signal to the probe signal combining sections 103-1 to 103-n. The communication traffic signal is received by the antennas 102-1 to 102-n and outputted to the probe signal combining sections 103-1 to 103-n.

The probe signal combining sections 103-1 to 103-n combine the respective communication traffic signals received by the antennas 102-1 to 102-n and the probe signal outputted from the probe signal generating section 101. In order to accurately find the variations of the amplitude and phase of the received signals in the AAA receiving apparatus, it is better that the probe signal combining sections 103-1 to 103-n are provided close to the respective antennas. The combined signals (received signals) are outputted to the frequency converting sections 104-1 to 104-n.

The frequency converting sections 104-1 to 104-n convert the frequencies of the received signals outputted from the probe signal combining sections 103-1 to 103-n from radio frequencies into base-band frequencies to obtain received base-band signals. The received base-band signals are outputted to each of the amplitude-phase information acquiring section 105, the received power measuring section 106, and the correcting section 108.

The amplitude-phase information acquiring section 105 de-spreads the received base-band signals outputted from the frequency converting sections 104-1 to 104-n by the spreading code notified from the probe signal generating section 101 to extract the probe signal from the received base-band signals. Amplitude-phase information is acquired from the extracted probe signal for each antenna. Here, amplitude-phase information only of the probe signal is acquired from the received base-band signal obtained by combining the communication traffic signal and the probe signal, but the amplitude-phase information of the probe signal is obtained as a factor in determining a correction value because the amplitude-phase variation of the communication traffic signal across the path subsequent to each antenna is the same as the amplitude-phase variation of the combined probe signal. Thus, the amplitude-phase variation that occurs due to the characteristics and the like of the electronic elements subsequent to each antenna can be detected.

The received power measuring section 106 measures the received powers of the received base-band signals outputted from the frequency converting sections 104-1 to 104-n. One of measuring methods is a method where the sum of the squares of I and Q components of the received base-band signal is calculated. The measured, received powers are notified to the correction value control section 107.

The correction value control section 107 determines correction values based on the amplitude-phase information outputted from the amplitude-phase information acquiring section 105 and the received powers notified by the received power measuring section 106. A specific method of determining correction values will be described below.

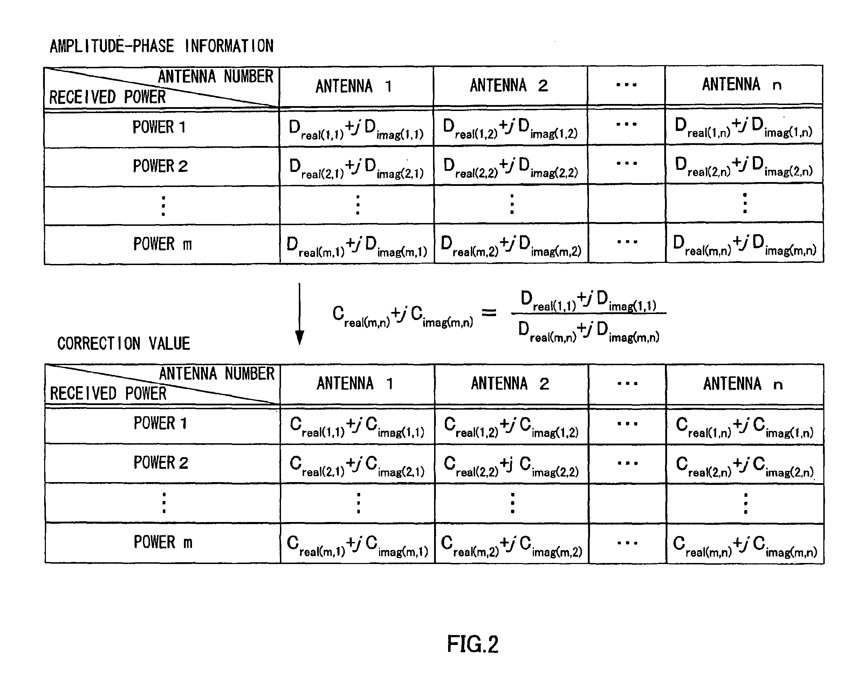

With reference to FIG.2, using the received powers as a parameter, the received powers are classified into power 1 to power m (hereinafter, called "power level") for respective predetermined level ranges. Using the combination of an antenna number (antennas 1 to n) and the power level as an address, the amplitude-phase information is associated with the address as shown in FIG.2 to create a table. The correction value control section 107 can continue to acquire the amplitude-phase information for an arbitrary-length time in order to create this table.

The method of calculating correction values is to divide, using amplitude-phase information as a reference value, the reference value by other amplitude-phase information to calculate them. In FIG.2, by dividing phase information of the power 1 for the antenna 1, Dᵣₑₐₗ (1,1) +j D_{imag} (1,1), as a reference value, by other amplitude-phase information, correction values are calculated.

The correction value control section 107, for all antennas, searches for a correction value corresponding to the received power measured by the received power measuring section 106 from among the calculated correction values, and outputs the correction value found to the correcting section 108. Note that in the present embodiment, when amplitude-phase information already exists at an address in the table associated with amplitude-phase information acquired by the correction value control section 107, it is replaced with the newly acquired amplitude-phase information, and accordingly the correction value is also updated.

The correcting section 108 multiplies, for each antenna, the received base-band signal outputted from the frequency converting section 104-1 to 104-n by the respective correction value outputted from the correction value control section 107 to correct for the amplitude-phase-characteristic difference. Thus, the amplitude-phase-characteristic difference due to variations of the input power levels of the electronic elements can be corrected for, and thereby the amplitude and phase having varied due to the characteristics of the electronic elements and the like can be made to return to the amplitude and phase at the time when received by the antenna. As a result, the AAA receiving apparatus 100 can form desired directivity by performing the amplitude adjustment and the phase shift on the amplitude and phase of the communication traffic signal received by each antenna element, that is, can accurately control directivity.

Note that in the present embodiment when amplitude-phase information already exists at an address associated with amplitude-phase information acquired by the correction value control section 107, it is replaced with the newly acquired amplitude-phase information, but that when a plurality of amplitude-phase information are associated with an address, correction values are respectively calculated from the plurality of amplitude-phase information, and a representative value such as an average value, a mode value, or a median value may be calculated from the plurality of calculated correction values, and used instead.

As described above, according to the present embodiment, the accuracy in correcting for the amplitude-phase-characteristic difference due to variations of the levels of the input powers to the electronic elements can be improved by adaptively determining the correction value based on the amplitude-phase information and the input power level, and thus accurate directivity control can be performed.

### (Embodiment 2)

In embodiment 2 of the present invention, a case will be described where in a non-communication time such as an initial operation time of an AAA receiving apparatus 300, amplitude-phase information is acquired beforehand by randomly changing the output power of the probe signal.

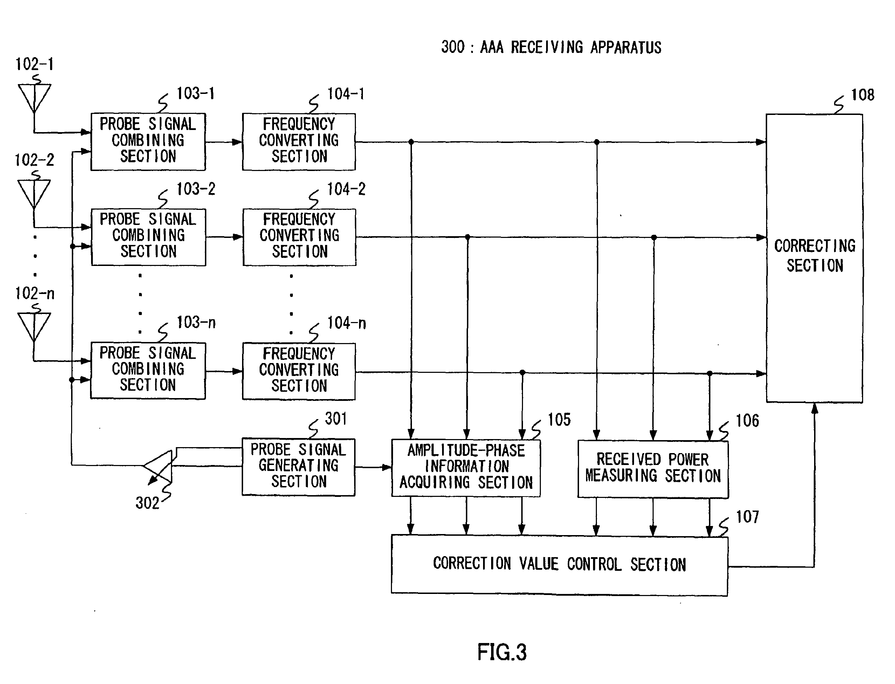

FIG.3 is a block diagram showing the configuration of the AAA receiving apparatus 300 according to the embodiment 2 of the present invention. The components in FIG.3 similar to those of FIG.1 are indicated by the same reference symbols as in FIG.1 without detailed description. This figure differs from FIG. 1 in that the probe signal generating section 101 is replaced by a probe signal generating section 301 and that an attenuator 302 is added. Furthermore, the correction value control section 107, when a plurality of amplitude-phase information are associated with an address, calculates correction values from the plurality of amplitude-phase information, and uses a statistical representative value such as an average value, a mode value, or a median value of the plurality of calculated correction values.

The probe signal generating section 301, in a non-communication time such as an initial operation time, generates a probe signal having the same frequency as the communication traffic signal, and outputs the generated probe signal to the attenuator 302.

The attenuator 302 randomly adjusts the output power of the probe signal outputted from the probe signal generating section 301. In particular, if the attenuator 302 can randomly control the output power of the probe signal over the entire range of the received power which the AAA receiving apparatus 300 can receive, it can be prevented that amplitude-phase information for a specific power level are more often acquired by the correction value control section 107 than for the others.

Because in the present embodiment correction values are calculated statistically as mentioned above, when many amplitude-phase information are acquired for a specific power level, or conversely few amplitude-phase are acquired, the reliability of the correction values may vary depending the number of acquired amplitude-phase information. Therefore, variations occur in the accuracy in correcting the amplitude and phase. In order to prevent such variations, the numbers of acquired amplitude-phase information for the respective power levels are made almost even by randomly controlling the power of the probe signal. That is, by preventing amplitude-phase information for a specific power level from being more often acquired than for the others, the reliability of the correction value for each power level can be made constant.

Next, the respective operations of the AAA receiving apparatus 300 having the above configuration in non-communication and communication times will be described. Note that a detailed description of the same operation as with the embodiment 1 is omitted. First, the operation in the non-communication time will be described.

The probe signal generating section 301 generates a probe signal, and outputs the generated probe signal to the attenuator 302. The attenuator 302 randomly adjusts the output power of the probe signal over the entire range which the AAA receiving apparatus can receive.

The amplitude-phase information acquiring section 105 calculates variations of the amplitude and phase of the received signal (probe signal) due to the characteristic difference of the electronic elements subsequent to each antenna and the path difference, and notifies the calculating results to the correction value control section 107.

The received power measuring section 106 measures the power of the received signal (probe signal), and notifies the measuring result to the correction value control section 107.

The correction value control section 107 calculates a correction value based on the variations of the amplitude and phase, and the power, of each received signal (probe signal) to create a table as shown in FIG.2. That is, in a non-communication time, the correction value is calculated beforehand and stored in the table. Thus, compared with the case of calculating a correction value in a communication time, the reliability of the correction value can be increased beforehand, so that the accuracy in correcting for the amplitude-phase-characteristic difference can be improved earlier.

Next, the operation in a communication time will be described. The communication traffic signal transmitted from a communication partner is received by each of the antenna 102-1 to 102-n. The communication traffic signals received by the antenna 102-1 to 102-n are outputted to the received power measuring section 106 via the probe signal combining sections 103-1 to 103-n and the frequency converting sections 104-1 to 104-n respectively. Note that in the communication time a probe signal need not be generated and the communication traffic signals need not be combined with a probe signal. Moreover, the operation in the amplitude-phase information acquiring section 105 need not be performed. Thus, compared with the case of calculating a correction value in the communication time, the signal processing load in communication can be reduced.

The received power measuring section 106 measures the power of the received signal consisting only of the communication traffic signal, and notifies the measuring result to the correction value control section 107. At the correction value control section 107, based on the prestored table, a correction value corresponding to the power of the communication traffic signal is searched for. The found correction value is notified to the correcting section 108.

Although, in the embodiment 1, using the probe signal orthogonal to the communication traffic signal was described, it is difficult to actually make them completely orthogonal to each other, and, when both the signals are combined, they interfere with each other. On the other hand, in the present embodiment interferes can be avoided because the probe signal and the communication traffic signal need not be combined. Therefore, in the non-communication time, correction values can be accurately calculated using only the probe signal, and in the communication time, received powers can be accurately measured using only the communication traffic signal, and thus correction values can be accurately determined.

According to the present embodiment, in a non-communication time such as an initial operation time of an AAA receiving apparatus, it can be prevented by acquiring amplitude-phase information beforehand with randomly changing the output power of the probe signal that amplitude-phase information for a specific power level are more often acquired than for the others, and correction values with high reliability can be determined. Thereby, quick and accurate directivity control can be performed using the correction values with higher reliability as compared with the case of calculating correction values in a communication time. Furthermore, by calculating and storing a correction value for each power level beforehand in a non-communication time, the signal processing load in communication can be reduced.

### (Embodiment 3)

In the present embodiment, a case will be described where the adaptive array technology is applied to a TDD (Time Division Duplex) scheme and where, in a Time Slot when no communication traffic signal is input (hereinafter, called "empty TS"), a probe signal is generated and correction values are calculated.

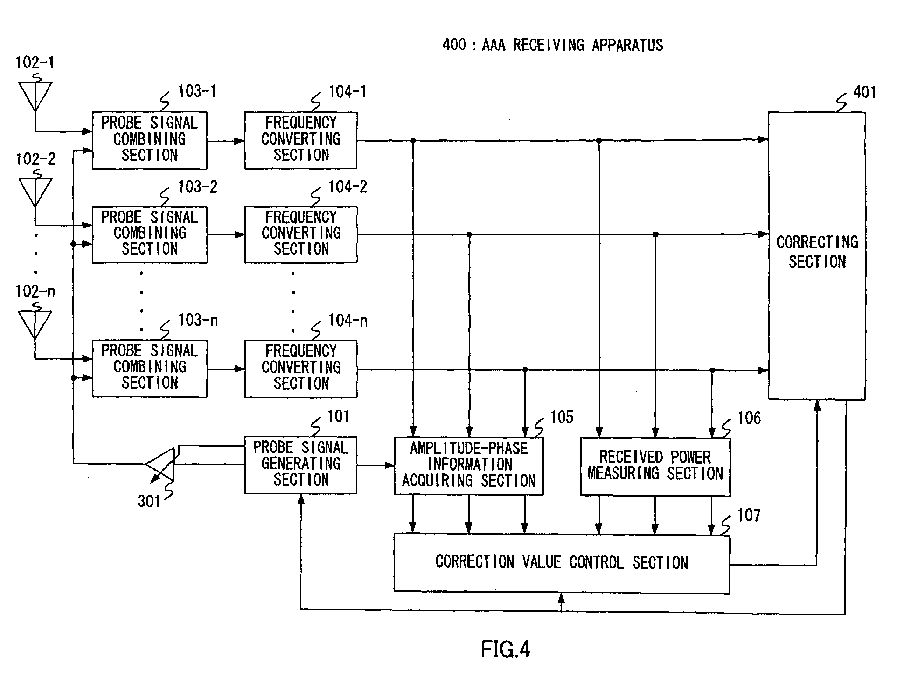

FIG.4 is a block diagram showing the configuration of the AAA receiving apparatus 400 according to the embodiment 3 of the present invention. The components in FIG.4 similar to those of FIG.3 are indicated by the same reference symbols as in FIG.3 without detailed description. This figure differs from FIG.3 in that a correcting section 401 controls the probe signal generating section 101 and the correction value control section 107 in the empty TS.

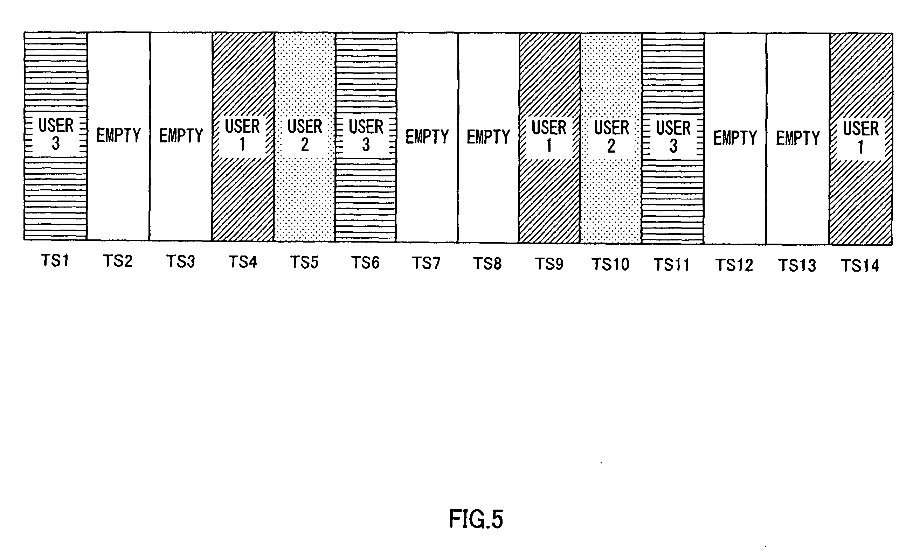

First, the state of assignment of TS's which the AAA receiving apparatus 400 receives is shown in FIG. 5. This figure shows TS1 to TS 14, of which TS2, TS3, TS7, TS8, TS12, and TS13 are empty TS's.

Referring back to FIG.4, when detecting an empty TS (for example, TS2 in FIG.5) where no received base-band signals are input from the frequency converting sections 104-1 to 104-n, the correcting section 401 instructs the probe signal generating section 101 to generate and output a probe signal, and the correction value control section 107 to calculate correction values.

The AAA receiving apparatus 400, in the empty TS, acquires amplitude-phase information of the received signal consisting only of the probe signal and measures the power thereof. Hence, so as to be able to determine a correction value whatever power of communication traffic signal is received, correction values need to be calculated beforehand. That is, it is necessary that the attenuator 301 control the output power from the probe signal generating section 101 over the entire range of the received power which the AAA receiving apparatus 400 can receive, and that the correction value control section 107 acquires amplitude-phase information for each received power level beforehand.

According to the present embodiment, by generating a probe signal and calculating correction values in an empty TS, the probe signal and the communication traffic signal need not be combined even during communication, and hence it can be avoided that the probe signal and the communication traffic signal interfere with each other, so that with the TDD scheme, more accurate correction values can be determined.

The first aspect of the present invention has a configuration comprising a plurality of antenna elements that receives a communication traffic signal transmitted by a communication partner; an amplitude-phase information acquiring section that acquires information about a variation of the amplitude and phase of each of communication traffic signals received by the plurality of antenna elements with respect to the amplitude and phase at the time when received by the antenna elements; a received power measuring section that measures the received power of the communication traffic signal for each antenna element; a correction value control section that adaptively determines, based on the received power, a correction value for correcting for the variation of the amplitude and phase of the communication traffic signal; and a correcting section that corrects for the variation by using the correction value.

According to this configuration, the correction value for correcting for the variation of the amplitude and phase of the communication traffic signal is adaptively determined based on the received power, and using the correction value, the accuracy in correcting for the variation of the amplitude and phase due to the variations of input power levels for electronic elements can be improved. As a result, accurate directivity control can be performed.

A second aspect of the present invention has a configuration comprising a probe signal generating section which generates a probe signal having the same frequency as and orthogonal to the communication traffic signal; and a combining section which combines the communication traffic signal and the probe signal, and wherein the received power measuring section measures the power of the probe signal for each antenna element.

According to this configuration, by combining the probe signal with the communication traffic signal, the variation of the amplitude and phase of the communication traffic signal can be found from the probe signal, and the received power in determining a correction value can be determined, by measuring the probe signal's power, based on the power after the combining.

A third aspect of the present invention has a configuration wherein the correction value control section calculates, for each received power level, a correction value for correcting for the variation of the amplitude and phase of the communication traffic signal by using the probe signal, stores the calculated correction values, and selects a stored correction value corresponding to the received power of the communication traffic signal.

According to this configuration, the correction value is adaptively determined based on the received power of the communication traffic signal, and by using the correction value, the variation of the amplitude and phase due to the variations of input power levels of the electronic elements can be accurately corrected for.

A fourth aspect of the present invention has a configuration comprising an output power adjusting section that adjusts the output power of the probe signal arbitrarily within a predetermined range, wherein the probe signal generating section generates the probe signal only in a non-communication time.

According to this configuration, the probe signal generating section generates the probe signal only in a non-communication time, and the output power adjusting section adjusts the output power of the probe signal arbitrarily. Thus, in a state where no communication traffic signal is input, correction values are calculated beforehand, so that the correction values are not calculated during communication and the processing load in communication can be reduced.

A fifth aspect of the present invention is an adaptive array antenna receiving apparatus according to claim 3 used in a TDD-scheme radio communication system and has a configuration comprising an output power adjusting section that adjusts the output power of the probe signal arbitrarily within a predetermined range, wherein the correcting section instructs the probe signal generating section to generate a probe signal in an empty time slot where no communication traffic signal is input, and the correction value control section to calculate correction values.

According to this configuration, by generating the probe signal in an empty time slot where no communication traffic signal is input, the communication traffic signal and the probe signal need not be combined even during communication, so that interference occurring in the combining can be avoided. Hence, correction values can be accurately calculated, and thus the variation of the amplitude and phase can be accurately corrected for.

A sixth aspect of the present invention has a configuration wherein, when there are a plurality of correction values for correcting for a variation of the amplitude and phase of one communication traffic signal, the correction value control section determines a representative value from among the plurality of correction values.

According to this configuration, by using a statistical value such as an average value, a mode value, or a median value of the plurality of correction values, a correction value higher in reliability can be determined as the number of the correction values increases.

A seventh aspect of the present invention has a configuration having a base station apparatus comprising the above adaptive array antenna receiving apparatus.

According to this configuration, a correction value for correcting for the variation of the amplitude and phase of the communication traffic signal is adaptively determined based on the received power, and by using the correction value, the accuracy in correcting for the variation of the amplitude and phase due to the variations of input power levels for the electronic elements can be improved. As a result, accurate directivity control can be performed.

An eighth aspect of the present invention comprises the steps of measuring the received power of each of communication traffic signals received by a plurality of antenna elements; adaptively determining, based on the received power, a correction value for correcting for the variation of the amplitude and phase of each communication traffic signal with respect to those at the time when received by the antenna elements; and correcting for the variation of the amplitude and phase of the communication traffic signal by using the correction value determined based on the received power.

According to this method, a correction value for correcting for the variation of the amplitude and phase of each communication traffic signal is adaptively determined based on the received power, and by using the correction value, the accuracy in correcting for the variation of the amplitude and phase due to the variations of input power levels for the electronic elements can be improved. As a result, accurate directivity control can be performed.

As described above, according to the present invention, correction values are adaptively determined based on amplitude-phase and received powers, and by using the correction values, the amplitude-phase-characteristic differences between the antennas due to variations of input power levels for the electronic elements can be accurately corrected for. As a result, accurate directivity control can be performed.

The present description is based on Japanese Patent Application No. 2002-113760 filed on April 16, 2002, which is herein incorporated by reference.

### INDUSTRIAL APPLICABILITY

The present invention is suitable to be used in a radio base station apparatus and the like in a mobile radio communication system.

## Claims

1. An adaptive array antenna receiving apparatus comprising:
a plurality of antenna elements that receives a communication traffic signal transmitted by a communication partner;
an amplitude-phase information acquiring section that acquires information about a variation of the amplitude and phase of each of communication traffic signals received by said plurality of antenna elements with respect to the amplitude and phase at the time when received by said antenna elements;
a received power measuring section that measures a received power of said communication traffic signal for each said antenna element;
a correction value control section that adaptively determines, based on said received power, a correction value for correcting for the variation of the amplitude and phase of said communication traffic signal; and
a correcting section that corrects for said variation by using said correction value.

2. The adaptive array antenna receiving apparatus according to claim 1, comprising:
a probe signal generating section that generates a probe signal having the same frequency as said communication traffic signal and being orthogonal to said communication traffic signal; and
a combining section that combines said communication traffic signal and said probe signal,
wherein said received power measuring section measures the power of said probe signal for each said antenna element.

3. The adaptive array antenna receiving apparatus according to claim 2, wherein said correction value control section calculates, for each received power level, a correction value for correcting for the variation of the amplitude and phase of said communication traffic signal by using said probe signal, stores the calculated correction values, and selects a stored correction value corresponding to the received power of said communication traffic signal.

4. The adaptive array antenna receiving apparatus according to claim 2, comprising:
an output power adjusting section that adjusts an output power of said probe signal arbitrarily within a predetermined range,
wherein said probe signal generating section generates the probe signal only in a non-communication time.

5. The adaptive array antenna receiving apparatus according to claim 3, which is used in a TDD-scheme radio communication system, comprising:
an output power adjusting section which adjusts an output power of said probe signal arbitrarily within a predetermined range,
wherein said correcting section instructs said probe signal generating section to generate a probe signal in an empty time slot where no communication traffic signal is input, and said correction value control section to calculate correction values.

6. The adaptive array antenna receiving apparatus according to claim 3, wherein, when there are a plurality of correction values for correcting for a variation of the amplitude and phase of one communication traffic signal, said correction value control section determines a representative value from among the plurality of correction values.

7. A base station apparatus comprising the adaptive array antenna receiving apparatus according to claim 1.

8. An antenna-array correcting method comprising the steps of:
measuring a received power of each of communication traffic signals received by a plurality of antenna elements;
adaptively determining, based on said received power, a correction value for correcting for a variation of amplitude and phase of each of the communication traffic signals with respect to those at the time when received by the antenna elements; and
correcting for the variation of amplitude and phase of said communication traffic signal by using the correction value determined based on said received power.
